# EUROPEAN PATENT SPECIFICATION

(11) **EP 1 272 971 B1**
(45) Date of publication and mention of the grant of the patent: **16.12.2009**
(21) Application number: 01914310.6
(22) Date of filing: 21.03.2001
(51) Int. Cl.: G06F 3/03, G06F 3/00, G06F 3/033

(54) **INFORMATION MANAGEMENT**
INFORMATIONSMANAGEMENT
GESTION D'INFORMATIONS

(30) Priority: 05.04.2000 SE 0001253
(43) Date of publication of application: 08.01.2003
(73) Proprietor: Anoto AB, 227 22 Lund (SE)
(72) Inventor: ERICSON, Petter, S-212 14 Malmö (SE); WESTERBERG, Ida, S-217 52 Malmö (SE)
(74) Representative: Perklev, Karin Cecilia
(86) International application number: PCT/SE2001/000591
(87) International publication number: WO 2001/075780

(56) References cited:
- EP-A1- 0 407 734
- EP-A2- 0 660 260
- WO-A1-00/25293
- SE-B- 449 142
- US-A- 5 661 506
- US-A- 5 852 434
- DATABASE
- LECTURE NOTES IN COMPUTER SCIENCE, vol. 1375, 30 March 1998 (1998-03-30), pages 392-406, XP002328425 Berlin

## Description

### Field of the Invention

The present invention relates to a product, a device and a method for managing information, in particular information which is recorded digitally by detecting a pattern.

### Background of the Invention

US 5,852,434 discloses a device which makes it possible for a user to input handwritten or hand drawn information into a computer at the same time as the information is written/drawn on the writing surface. The device comprises a writing surface on which a position code is arranged which codes X/Y coordinates, and a special pen with a pen point with which the user can write or draw on the writing surface. The pen also has a light source for illuminating the position code and a CCD sensor for receiving the light which is reflected from the position code. The position information received by the CCD sensor is sent to a computer for processing.

The prior art further comprises the article "Intelligent Paper", LECTURE NOTES IN COMPUTER SCIENCE, SPRINGER VERLAG, BERLIN, DE, 30.03.98, vol. 1375, pages 392-406, which discloses a sticker carrying a unique code. The sticker may be attached to a paper document and its unique code is associated with an action to be performed in a communication infrastructure.

### Summary of the Invention

It is an object of the present invention to increase the possibility of managing information which is written/drawn on a writing surface and is, at the same time, recorded digitally by a pen.

This object is achieved by means of a system according to claim 1 and a method according to claim 10. Preferred embodiments are defined in the subclaims.

More specifically, the present invention according to a first aspect relates to a system comprising a product for managing information. The product defines a function which will be executed with respect to information which is recorded from a writing surface. The product is also provided with a pattern which is specific to said function so that detection of the pattern makes it possible to identify the function automatically. Finally, the product is intended to be attached to the writing surface and comprises means for attaching it thereto.

This product can thus be used for defining different functions which will be executed with respect to recorded information. This increases the functionality of digital pens. A user does not first need to record information with the aid of the digital pen and then process the information further in a computer but the user can execute all operations with the aid of only his digital pen, a writing surface and the product which defines the function which will be executed with respect to the recorded information.

Assuming, for example, that a user has noted something on a sheet of patterned paper with the aid of a digital pen. The note has been recorded digitally with the aid of the pen. It relates to a task which the user is to remember to carry out. The user wants to store the note in a task list in his computer. He takes a product which defines the function of storing recorded information in a task list and attaches this product to the sheet of paper. He then reads the pattern on the product with his digital pen which results in the note being stored in the task list in his computer.

The writing surface can be a sheet of paper, a whiteboard, a magnetic tablet or some other writing surface on which it is possible to write or draw information by hand.

The means for attaching the product to the writing surface can be any type of means which make it possible to attach the product temporarily or permanently to the writing surface. They can be, for example, mechanical means which engage the writing surface, magnetic means which attach to the writing surface with the aid of magnetic forces or adhesive means which cause the product to adhere to the writing surface.

The pattern is an absolute-position coding pattern, because its use require less processing capacity.

As can be seen from the above, the product is suitably used together with a writing surface which is provided with an absolute-position coding pattern which enables handwritten information to be recorded in digital form. In this case, the same digital pen which is used for recording the information from the writing surface can be used for identifying the function which is to be executed with respect to the information since the pen detects an absolute-position coding pattern in both cases.

The product can also be used together with an arbitrary writing surface and a digital pen which records handwritten text in another way than by reading a pattern. An example of such a digital pen is a pen which has one or more accelerometers which sense displacement of the pen. In this case, the pen must also be provided with an optical sensor which can record the absolute-position coding pattern on the product. Another example is a digital pen which records handwritten text in the way which is described in the International patent publication No. WO 99/60467.

The absolute-position coding pattern on the product is a first subset of a larger virtual absolute-position coding pattern which codes coordinates for a large number of points on an imaginary surface, and the absolute-position coding pattern on the product codes coordinates for at least one of said points which are lying within a first coordinate area which is dedicated to said function.

This can be seen as if a small part is cut out or the larger absolute-position coding pattern and placed on the product. This part can correspond to the entire coordinate area which is dedicated to the product function or to a partial area thereof. It is thus not absolute positions on the local product which are coded but absolute positions on the global imaginary surface.

The function can be identified in that said coordinate area has been dedicated to only this function. The product can also be placed on writing surfaces with the same type of absolute-position coding pattern and a digital pen which records coordinates both from the writing surface and from the product can still distinguish how the coordinates are to be processed.

The first coordinate area is situated at a distance from a second coordinate area on the imaginary surface which contains points, the coordinates of which are coded by a second subset of the larger virtual absolute-position coding pattern, the second subset being located on the writing surface. In this way, the product is distinguished in a sample manner from the writing surface.

The function which the product defines can be a function from the group sending the recorded information, for example as an e-mail, as a fax or as an SMS message and converting the recorded information and storing the recorded information, preferably in a predetermined application. The application can be, for example, a task list, a calendar, an address brook or a similar application in which it is intended to store preferably short notes of the type which one prefers to write by hand on paper. The conversion of the recorded information can consist of character recognition, encryption, conversion of drawing format, translation or the like.

Different products can define different functions. A product is, therefore, advantageously provided with a visual indication which specifies the function associated with the product so that the user clearly sees which product he is to select when he wants to carry out a predetermined function.

The absolute-position coding pattern can be composed in different ways. In US 5,852,434 initially mentioned, for example, an absolute-position coding pattern is described which codes each position with a unique symbol. In consequence, this symbol is rather complex and thus difficult to detect correctly.

In a preferred embodiment, the absolute-position coding pattern on the product is composed of a plurality of identical markings which are displaced in relation to a regular raster. The advantage of this graphical configuration of the pattern is that the detection of positions with the aid of the pattern is more reliable. An example of such an absolute-position coding pattern is shown in the International patent application No. WO 01/16691.

Some of the functions which can be defined with the product imply that information is to be sent to a receiver, the address of which must be specified in some way. To achieve this object, the product can contain a writing area for address information. This writing area can have a special absolute-position coding pattern which is dedicated to address information.

The product is advantageously an adhesive label in which the means for attaching the adhesive label to the writing surface comprises a layer with adhesiveness. The adhesive label can here include all types of thin, sheet-shaped products which adhesiveness.

The layer with the adhesiveness can be a layer of glue which essentially permanently attaches the adhesive label to the writing surface. An adhesive label of this type needs to be provided with a protective paper which is removed in use. As an alternative, the layer can be of low adhesiveness so that the label can be removed and used again. As a further alternative, the layer can be of a type which needs to be activated, for example moistened, for adhesion to come about. Other alternatives are also conceivable.

The adhesive labels can be advantageously arranged as an adhesive-label chart which comprises a plurality of adhesive labels of the type described above. They can be arranged, for example, in a similar way to a postage stamp chart with separating lines between the adhesive labels or on a common protective sheet from which the adhesive labels are removed one at a time.

A plurality of adhesive labels which are associated with different functions are suitably arranged as one chart so that the user can have access to a complete set of different functions.

According to an aspect of the invention, it provides a system for managing information comprising the product and a writing surface which is provided with a second pattern and to which the product is attached.

This system thus occurs when the product is attached to the writing surface. The advantages of the system are described above.

According to yet another aspect of the invention, it provides a method for managing information comprising the steps of recording information which is written on a writing surface, in digital form, attaching a product with a first pattern to the writing surface, which first pattern defines a predetermined function which will be executed with respect to the digitally recorded information, and initiating the execution of said predetermined function through detection of the first pattern.

The advantages of the method are described above.

### Brief Description of the Drawings

The present invention will now be described by means of embodiments with reference to accompanying drawings, in which
Fig. 1 schematically shows a first embodiment of a product according to the invention,
Fig. 2 schematically shows a device of a device according to the invention,
Fig. 3 schematically shows the location of a first and a second coordinate area on an imaginary surface,
Fig. 4 shows an embodiment of a digital pen which can be used together with the product and the device according to the invention,
Fig. 5 is a flow diagram of an example of a method according to the invention, and
Fig. 6 schematically shows a second embodiment of a product according to the invention.

### Description of Preferred Embodiments

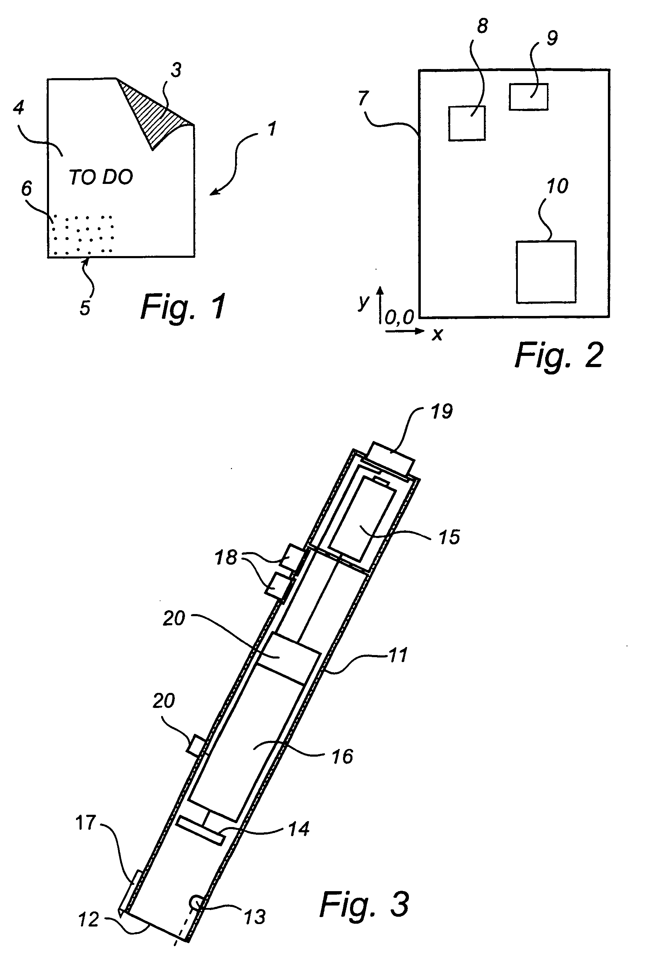

Fig. 1 shows an adhesive label 1. The adhesive label 1 consists of a small piece of paper which is provided on its reverse side with an adhesive layer 3. On the front of the adhesive label is located a visual indication 4 of the function of the adhesive label which, in this case, is to store a task in a digital task list. On the front is also located a first absolute-position coding pattern 5 which is constructed of a large number of points 6. Each point codes one of four values (00, 01, 10 or 11). The value of the point is determined by its position in relation to a regular virtual raster, i.e. an imagined raster which is not visible on the product. A plurality of points, for example 5 x 5 points, code coordinates of a position on an imaginary surface, the first binary bit in the values of the points together code an x coordinate and the second binary bit in the values of the points together code a y coordinate. Each such area with 5 x 5 points codes a unique position on the imaginary surface, which means that the pen only needs to read an arbitrary area which contains 5 x 5 points in order to be able to determine a position. Each point thus contributes to the coding of the coordinates of a plurality of positions.

The points can be so small that they are only perceived by the human eye as a grey tone on the adhesive label.

An example of an absolute-position coding pattern of this type is described in the International patent application No. WO 01/16691. This application is incorporated herein by reference. An alternative absolute-position coding pattern which resembles the above is shown in the International patent publication No. WO 00/73983.

In the embodiment shown in Fig. 1, the absolute-position coding pattern extends over the front of the entire adhesive label 1. For clarity, it will only be shown on a small part of the adhesive label in Fig. 1.

The absolute-position coding pattern 5 on the adhesive label constitutes a subset of a larger, virtual absolute-position coding pattern which codes the coordinates for a large number of points on an imaginary surface. By this is meant that the entire larger virtual absolute-position coding pattern is not written out somewhere but that it corresponds to the entire unique absolute-position coding pattern which, in principle, can be built up by means of the coding used. In the same way, the imaginary surface corresponds to the imagined surface which is formed by all the unique points which can be coded with the aid of the absolute-position coding pattern.

The adhesive label 1 defines a function which will be executed with respect to information which is recorded from a writing surface. The function is determined by the coordinates which are coded by the absolute-position coding pattern on the adhesive label.

As already mentioned, the adhesive label in Fig. 1 defines the function of storing a task in a digital task list. To this end, the absolute-position coding pattern 5 on the adhesive label codes coordinates of points which are lying within a first coordinate area on the imaginary surface. This first coordinate area is dedicated to the function of storing a task in a digital task list.

The above is illustrated schematically in Fig. 2 which shows an imaginary surface 7 which comprises the first coordinate area 8 which is dedicated to the function of storing a task in a digital task list. The imaginary surface also has a second coordinate area 9 which is dedicated to handwritten notes. The subset of the absolute-position coding pattern which codes coordinates of points within the second coordinate area can be applied, for example, to a notepaper. It also has a third coordinate area 10 which is dedicated to the function of sending an e-mail.

Naturally, other areas on the imaginary surface can be dedicated to other functions which can be defined with the aid of other adhesive labels.

Fig. 3 shows a digital pen which can be used for recording information which is written on a writing surface with absolute-position coding pattern and for reading the absolute-position coding pattern on the adhesive label in Fig. 1.

The digital pen comprises a casing 11 which has an opening 12 in its short side. The short side is intended to abut against or be held at a small distance from the surface from which the absolute-position coding pattern is to be read.

The casing mainly accommodates an optical part, an electronic part and a power supply.

The optical part comprises at least one light-emitting diode 13 for illuminating the surface which is to be imaged and a light-sensitive area sensor 14, for example a CCD or CMOS sensor, for recording a two-dimensional image. The digital pen may also contain a lens system.

The power supply for the user unit is obtained from a battery 15 which is mounted in a separate compartment in the casing.

The electronic part contains a processor 16 which is programmed for recording an image from the sensor 14, identifying points in the image, determining which two coordinates are coded by the points and storing these coordinates in its memory. As will be seen below, the processor can be programmed for managing the stored coordinates in different ways thereafter.

The digital pen also comprises a pen point 17 with the aid of which the user can write normal pigment-based writing which, at the same time, is recorded by the pen with the aid of the absolute-position coding pattern. The pen point 17 is retractable and extendable so that the user can control whether he will use it or not.

The pen also comprises buttons 18, with the aid of which the unit is activated and controlled. It also has a transceiver 19 for wireless communication such as via IR or a short range radio link (e.g. Bluetooth) with external units.

The pen can also comprise means 20 for emitting a signal when the pen detects that it has recorded coordinates which define a function. The means 20 can comprise, for example, a buzzer which emits a sound signal or a light-emitting diode which emits a light signal.

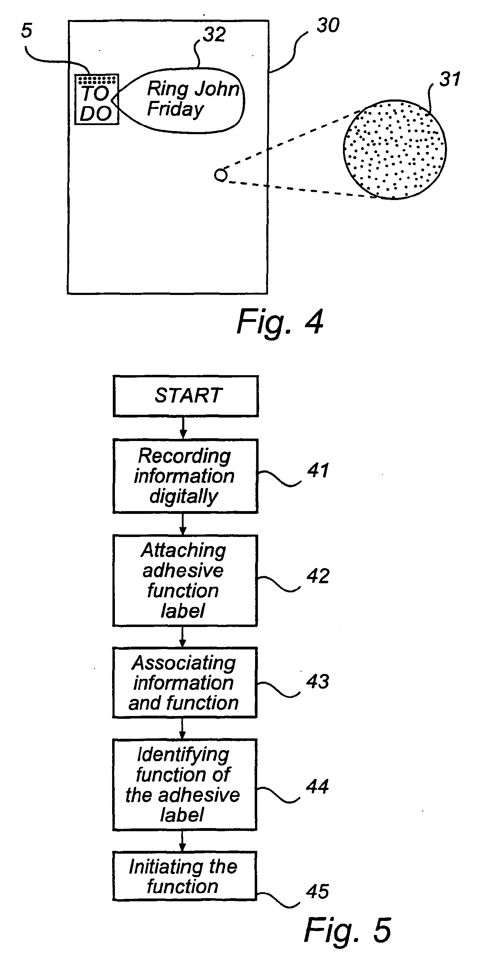

Referring to Figs 3-5, it will now be described how the adhesive label in Fig. 1 can be used. Assuming that the user has a notepaper 30 which is provided with a second absolute-position coding pattern which codes coordinates 31 within the second coordinate area 9 in Fig. 2 and which thus is dedicated to recording handwritten/hand-drawn notes. It is also assumed that the user is talking to John on the telephone and that they agree that the user will ring John on Friday. The user makes a note 32 about this on his notepaper 30 with his digital pen which digitally records the note by continuously detecting the part of the second absolute-position coding pattern which is located within the field of view of the image sensor 14 and storing the detected coordinates in the memory, step 41 in Fig. 4.

When the user finishes the telephone conversation, he wants to store the information which he has noted on the notepad in his digital task list in his computer. He takes out an adhesive label 1 with the indication "to do" and sticks it to the notepaper, step 42. After that, he associates the information which he wants to store as a task in the digital task list with the function "to do" by placing the digital pen on the adhesive label and drawing a line 32 from it and around the information and back to the adhesive label, step 43. The digital pen then detects the coordinates which are coded by the first absolute-position coding pattern on the adhesive label. The function of the adhesive label can be identified with the aid of these coordinates, step 44, and the function is initiated, step 45.

The recorded coordinates, which thus consist of the coordinates which represent the handwritten note, the coordinates from the adhesive label and the coordinates of the line 32 can be managed in different ways.

One alternative is that the digital pen itself contains information about different areas on the imaginary surface and that the digital pen can thus identify that the adhesive label defines the function of storing a note in a task list. In this case, the digital pen can send the coordinates which represent the "task" together with an indication of the function via the transceiver 19 to the computer of the user when the pen gets into contact with the computer. The pen may then also contain ICR software which converts the coordinates into characters so that the task can be sent and stored in character-coded format.

Another alternative is that the computer of the user contains software which carries out the above-mentioned steps, the processor of the digital pen being programmed for sending all coordinates which are lying within the first, second and third coordinate area in Fig. 2 to the computer of the user for further processing there.

A further alternative is that a part of the processing of the coordinates is carried out or controlled from a server in a computer network. This server can then contain information about different coordinate areas or domains on the imaginary surface 7. The digital pen can then be programmed to send all recorded information to this server which processes the information, interprets it and sends it on to a relevant location. According to a further variant, the digital pen only sends a part of the recorded information to the server which then returns instructions to the digital pen about how it should deal with the information. The digital pen can communicate with the server via a computer, a mobile telephone or some other unit which allows connection to a computer network such as the Internet.

As can be seen from the above, the recorded coordinates can be processed to a different degree in the pen and in external units with which the pen can communicate.

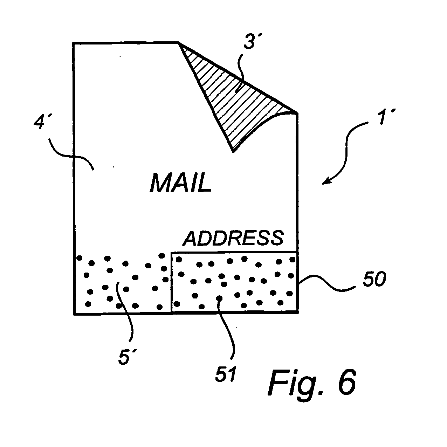

Fig. 6 shows another embodiment of an adhesive label which defines a function which is to be executed with respect to information which is recorded from a writing surface to which the adhesive label is attached. This embodiment is especially intended for functions which involve the recorded information being sent to a certain receiver.

Like the adhesive label in Fig. 1, the adhesive label 1' shown in Fig. 6 has a reverse side 3' with an adhesive layer, a front 4' with a visual indication of the function which is indicated by the adhesive label and a first absolute-position coding pattern 5' which codes coordinates which define at least one position in a coordinate area which is dedicated to this function. The adhesive label in Fig. 6 also has a writing area 50 which is intended for address information which the user writes by hand. The writing area can either be provided with the same absolute-position coding pattern as the remaining part of the adhesive label or with a fourth absolute-position coding pattern 51 which codes coordinates of at least one position within a coordinate area which is dedicated to address information.

Naturally, the address information can be specified in other ways. For example, it can be written in close vicinity to the line 32 in Fig. 4 or in a specified relation to the information. As a further alternative, it can be marked out with a special address symbol.

In a further variant, the user can have personal adhesive labels, whereby required address information is associated with the coordinates or coordinate area(s) which is/are coded by the absolute-position coding pattern on the personal adhesive labels of the user in a server. He can then define that his personal e-mail address should be associated with some of his adhesive labels, after which he can distribute these adhesive labels to persons from whom he wishes to receive e-mail.

The invention has been described above by examples which can be varied in many ways. The product according to the invention does not need to be an adhesive label which is attached to a sheet of paper but can be, for example, a magnetic product which is attached to a magnetic tablet on which the user can write erasable information. In the example above, the user writes a handwritten note. Naturally, the note can also consist of hand-drawn figures or any other graphical information. The pen point on the digital pen is not completely necessary since the pen notes information without help of what is written with pigment on a writing surface. The absolute-position coding pattern can be of another type than the one described above. It is enough for it to code a single pair of coordinates for one point on the imaginary surface when it is a matter of defining the function of the adhesive label. The code can, therefore, be constructed in such a manner that the same position is read independently of where on the function-defining surface of the adhesive label the digital pen is placed.

Instead of the absolute-position coding pattern, some other pattern which is specific to the function and which can be detected could be used. In principle, there can be any type of pattern, for example a geometric pattern or an image. This construction of the product, however, is less preferred since its use requires more processing capacity for the detection.

Furthermore, it should be pointed out that the function of a product first needs to be defined if it is to be used. For example, it is conceivable to sell products which are marked with numbers and let the user himself define the function with the aid of a program in his computer.

Finally, it should be pointed out that the association of the recorded information with the function can be made in other ways than that shown above. For example, it can be made by using different symbols.

## Claims

1. A system for managing information, the system comprising a product (1, 1') and a writing surface (30), wherein the product (1, 1') defines a function which is to be executed with respect to information which is recorded from the writing surface (30), the product (1, 1') being provided with a pattern (5, 5') which is specific to said function so that detection of the pattern (5, 5') makes it possible to identify the function automatically, and the product (1, 1') being intended to be attached to the writing surface (30) and comprising means (3, 3') for attaching it thereto,
wherein the pattern (5, 5') is an absolute-position coding pattern, that the absolute-position coding pattern (5, 5') on the product (1, 1') is a first subset of a larger virtual absolute-position coding pattern which codes coordinates for a large number of points on an imaginary surface (7), that the absolute-position coding pattern (5, 5') on the product (1, 1') codes coordinates for at least one of said points which are lying within a first coordinate area (8, 10) which is dedicated to said function, and that a second subset of the larger virtual absolute-position coding pattern is located on the writing surface (30), wherein the second subset codes coordinates of points contained in a second coordinate area (9) on the imaginary surface (7), and wherein said first coordinate area (8, 10) is situated at a distance from said second coordinate area (9) on the imaginary surface (7).

2. A system according to claim 1, in which the absolute-position coding pattern on the product (1, 1') is constructed of a plurality of identical markings which are displaced in relation to a regular raster.

3. A system according to claim 1 or 2, in which said function is a function from the group of sending the recorded information, converting the recorded information and storing the recorded information.

4. A system according to any one of the preceding claims, wherein the product (1, 1') is provided with a visual indication (4, 4') which specifies the function associated with the product (1, 1').

5. A system according to any one of the preceding claims, wherein the product (1') comprises a writing area (50) for address information.

6. A system according to any one of the preceding claims, wherein the product (1, 1') is an adhesive label and in which the means (3, 3') for attaching the adhesive label to the writing surface (30) comprise a layer with adhesiveness.

7. A system according to claim 5, comprising a plurality of adhesive labels (1, 1') included in an adhesive label chart.

8. A system according to claim 7, in which said plurality of adhesive labels (1, 1') is associated with different functions.

9. A system according to any one of claims 1-6, in which the product (1, 1') is attached to the writing surface (30).

10. A method for managing information comprising the steps of digitally recording information which is written on a writing surface (30), attaching a product (1, 1') with a first pattern (5, 5') to the writing surface (30), which first pattern (5, 5') defines a predetermined function which is to be executed with respect to the digitally recorded information, and initiating the execution of said predetermined function through detection of the first pattern (5, 5'), the method further comprising the step of recording the information through detecting a second pattern located on the writing surface (30), wherein the first pattern (5, 5') is an absolute-position coding pattern which is a first subset of a larger virtual absolute-position coding pattern which codes coordinates for a large number of points on an imaginary surface (7), wherein the absolute-position coding pattern (5, 5') on the product (1, 1') codes coordinates for at least one of said points, which are lying within a first coordinate area (8, 10) which is dedicated to said predetermined function, and wherein the second pattern is an absolute-position coding pattern which is a second subset of the larger virtual absolute-position coding pattern, wherein the second subset codes coordinates of points contained in a second coordinate area (9) on the imaginary surface (7), and wherein said first coordinate area (8, 10) is situated at a distance from said second coordinate area (9) on the imaginary surface (7).

11. A method according to claim 10, wherein the product (1, 1') is an adhesive label.

12. A method according to claim 10 or 11, wherein the steps of recording and initiating are performed by means of a digital pen capable of detecting the first pattern (5, 5') and the second pattern, wherein the step of initiating the execution of said predetermined function comprises the step of associating the recorded information with said function by connecting, with the aid of an indication with the digital pen, the product (1, 1') and the part of the writing surface (30) on which the recorded information is written.

13. A method according to any one of claims 10-12, wherein the steps of recording and initiating are performed by means of a digital pen capable of detecting the first pattern (5, 5') and the second pattern, furthermore comprising the step of recording an address indication with the aid of the digital pen.

## Patentansprüche

1. System zum Managen von Informationen, wobei das System ein Produkt (1, 1') und eine Schreibfläche (30) umfasst, wobei das Produkt (1, 1') eine Funktion definiert, die bezüglich Informationen durchzuführen ist, welche von der Schreibfläche (30) aufgezeichnet werden, wobei das Produkt (1, 1') mit einem Muster (5, 5') versehen ist, das für die Funktion spezifisch ist, so dass die Funktion durch Erfassen des Musters (5, 5') automatisch identifiziert werden kann, und wobei das Produkt (1, 1') an der Schreibfläche (30) befestigt werden soll und Mittel (3, 3') umfasst, um es daran zu befestigen,
wobei das Muster (5, 5') ein Absolutposition-Codiermuster ist, das Absolutposition-Codiermuster (5, 5') auf dem Produkt (1, 1') eine erste Teilmenge eines größeren, virtuellen Absolutposition-Codiermusters ist, das Koordinaten für eine große Anzahl von Punkten auf einer imaginären Fläche (7) codiert, das Absolutposition-Codiermuster (5, 5') auf dem Produkt (1, 1') Koordinaten für mindestens einen der Punkte codiert, die in einem ersten Koordinatenbereich (8, 10) liegen, der der Funktion zugeordnet ist, und eine zweite Teilmenge des größeren, virtuellen Absolutposition-Codiermusters auf der Schreibfläche (30) angeordnet ist, wobei die zweite Teilmenge Koordinaten von Punkten codiert, die in einem zweiten Koordinatenbereich (9) auf der imaginären Fläche (7) enthalten sind, und wobei sich der erste Koordinatenbereich (8, 10) in einem Abstand von dem zweiten Koordinatenbereich (9) auf der imaginären Fläche (7) befindet.

2. System nach Anspruch 1, wobei das Absolutposition-Codiermuster auf dem Produkt (1, 1') aus mehreren identischen Markierungen besteht, die bezüglich einem regulären Raster versetzt sind.

3. System nach Anspruch 1 oder 2, wobei die Funktion eine Funktion aus der aus Senden der aufgezeichneten Informationen, Umwandeln der aufgezeichneten Informationen und Speichern der aufgezeichneten Informationen bestehenden Gruppe ist.

4. System nach einem der vorhergehenden Ansprüche, wobei das Produkt (1, 1') mit einer visuellen Angabe (4, 4') versehen ist, die die dem Produkt (1, 1') zugeordnete Funktion angibt.

5. System nach einem der vorhergehenden Ansprüche, wobei das Produkt (1') einen Schreibbereich (50) für Adresseninformationen umfasst.

6. System nach einem der vorhergehenden Ansprüche, wobei das Produkt (1, 1') ein Klebeetikett ist und wobei das Mittel (3, 3') zum Befestigen des Klebeetiketts an der Schreibfläche (30) eine Haftfähigkeit aufweisende Schicht umfasst.

7. System nach Anspruch 5, das mehrere Klebeetiketten (1, 1') umfasst, die auf einer Klebeetikettkarte enthalten sind.

8. System nach Anspruch 7, wobei die mehreren Klebeetiketten (1, 1') verschiedenen Funktionen zugeordnet sind.

9. System nach einem der Ansprüche 1 - 6, wobei das Produkt (1, 1') an der Schreibfläche (30) befestigt ist.

10. Verfahren zum Managen von Informationen, das folgende Schritte umfasst: digitales Aufzeichnen von auf einer Schreibfläche (30) geschriebenen Informationen, Befestigen eines Produkts (1, 1') mit einem ersten Muster (5, 5') an der Schreibfläche (30), wobei das erste Muster (5, 5') eine vorbestimmte Funktion definiert, die bezüglich der digital aufgezeichneten Informationen durchzuführen ist, und Initiieren der Durchführung der vorbestimmten Funktion durch Erfassung des ersten Musters (5, 5'), wobei das Verfahren weiterhin den Schritt des Aufzeichnens der Informationen durch Erfassen eines sich auf der Schreibfläche (30) befindenden zweiten Musters umfasst, wobei das erste Muster (5, 5') ein Absolutposition-Codiermuster ist, das eine erste Teilmenge eines größeren, virtuellen Absolutposition-Codiermusters ist, das Koordinaten für eine große Anzahl von Punkten auf einer imaginären Fläche (7) codiert, wobei das Absolutposition-Codiermuster (5, 5') auf dem Produkt (1, 1') Koordinaten für mindestens einen der Punkte codiert, die in einem ersten Koordinatenbereich (8, 10) liegen, der der vorbestimmten Funktion zugeordnet ist, und wobei das zweite Muster ein Absolutposition-Codiermuster ist, das eine zweite Teilmenge des größeren, virtuellen Absolutposition-Codiermusters ist, wobei die zweite Teilmenge Koordinaten von Punkten codiert, die in einem zweiten Koordinatenbereich (9) auf der imaginären Fläche (7) enthalten sind, und wobei sich der erste Koordinatenbereich (8, 10) in einem Abstand von dem zweiten Koordinatenbereich (9) auf der imaginären Fläche (7) befindet.

11. Verfahren nach Anspruch 10, wobei das Produkt (1, 1') ein Klebeetikett ist.

12. Verfahren nach Anspruch 10 oder 11, wobei die Schritte des Aufzeichnens und Initiierens durch einen digitalen Stift durchgeführt werden, der das erste Muster (5, 5') und das zweite Muster erfassen kann, wobei der Schritt des Initiierens der Durchführung der vorbestimmten Funktion den Schritt des Zuordnens der aufgezeichneten Informationen zu der Funktion durch Verbinden des Produkts (1, 1') und des Teils der Schreibfläche (30), auf dem die aufgezeichneten Informationen geschrieben sind, mit Hilfe einer Angabe mit dem digitalen Stift umfasst.

13. Verfahren nach einem der Ansprüche 10 - 12, wobei die Schritte des Aufzeichnens und des Initiierens mittels eines digitalen Stifts durchgeführt werden, der das erste Muster (5, 5') und das zweite Muster erfassen kann, weiterhin umfassend den Schritt des Aufzeichnens einer Adressenangabe mit Hilfe des digitalen Stifts.

## Revendications

1. Système pour gérer des informations, ce système comprenant un produit (1, 1') et une surface pour écrire (30), dans lequel le produit (1, 1') définit une fonction qui doit être exécutée relativement aux informations qui sont enregistrées depuis la surface pour écrire (30), le produit (1, 1') étant pourvu d'un motif (5, 5') qui est spécifique à ladite fonction de façon à ce que la détection du motif (5, 5') rende possible d'identifier la fonction automatiquement, et le produit (1, 1') étant destiné à être attaché à la surface pour écrire (30) et comprenant un moyen (3, 3') pour l'attacher à celle-ci, dans lequel le motif (5, 5') est un motif de codage de position absolue, le motif de codage de position absolue (5, 5') sur le produit (1, 1') est un premier sous-ensemble d'un motif de codage de position absolue virtuelle plus grand qui code les coordonnées pour un grand nombre de points sur une surface imaginaire (7), le motif de codage de position absolue (5, 5') sur le produit (1, 1') code les coordonnées pour au moins un desdits points qui se trouvent à l'intérieur d'une première zone de coordonnées (8, 10) qui est dédiée à ladite fonction, et dans lequel un deuxième sous-ensemble du motif de codage de position absolue virtuelle plus grand est situé sur la surface pour écrire (30), ce deuxième sous-ensemble codant les coordonnées de points contenus dans une deuxième zone de coordonnées (9) sur la surface imaginaire (7), et ladite première zone de coordonnées (8, 10) étant située à une distance de ladite deuxième zone de coordonnées (9) sur la surface imaginaire (7).

2. Système selon la revendication 1, dans lequel le motif de codage de position absolue sur le produit (1, 1') est constitué d'une pluralité de marques identiques qui sont déplacées par rapport à une trame régulière.

3. Système selon la revendication 1 ou 2, dans lequel ladite fonction est une fonction parmi le groupe comprenant l'envoi des informations enregistrées, la conversion des informations enregistrées et le stockage des informations enregistrées.

4. Système selon l'une quelconque des revendications précédentes, dans lequel le produit (1, 1') est pourvu d'une indication visuelle (4, 4') qui spécifie la fonction associée au produit (1, 1').

5. Système selon l'une quelconque des revendications précédentes, dans lequel le produit (1, 1') comprend une zone d'écriture (50) pour les informations de l'adresse.

6. Système selon l'une quelconque des revendications précédentes, dans lequel le produit (1, 1') est une étiquette adhésive et dans lequel le moyen (3, 3') pour attacher l'étiquette adhésive à la surface pour écrire (30) comprend une couche avec de l'adhésivité.

7. Système selon la revendication 5, comprenant une pluralité d'étiquettes adhésives (1, 1') comprises dans un panneau d'étiquettes adhésives.

8. Système selon la revendication 7, dans lequel ladite pluralité d'étiquettes adhésives (1, 1') est associée à différentes fonctions.

9. Système selon l'une quelconque des revendications 1 à 6, dans lequel le produit (1, 1') est attaché à la surface pour écrire (30).

10. Procédé pour gérer des informations comprenant les étapes consistant à enregistrer numériquement des informations qui sont écrites sur une surface pour écrire (30), attacher un produit (1, 1') avec un premier motif (5, 5') à la surface pour écrire (30), lequel premier motif (5, 5') définit une fonction prédéterminée qui doit être exécutée relativement aux informations enregistrées numériquement, et à lancer l'exécution de ladite fonction prédéterminée au moyen de la détection du premier motif (5, 5'), ce procédé comprenant en outre l'étape consistant à enregistrer les informations au moyen de la détection d'un deuxième motif situé sur la surface pour écrire (30), dans lequel premier motif (5, 5') est un motif de codage de position absolue qui est un premier sous-ensemble d'un motif de codage de position absolue virtuelle plus grand qui code les coordonnées pour un nombre plus grand de points sur une surface imaginaire (7), dans lequel le motif de codage de position absolue (5, 5') sur le produit (1, 1') code les coordonnées pour au moins un desdits points, qui sont situés à l'intérieur d'une première zone de coordonnées (8, 10) qui est dédiée à ladite fonction prédéterminée, et dans lequel le deuxième motif est un motif de codage de position absolue qui est un deuxième ensemble du motif de codage de position absolue virtuelle plus grand, dans lequel le deuxième sous-ensemble code les coordonnées de points contenus dans une deuxième zone de coordonnées (9) sur la surface imaginaire (7), et dans lequel ladite première zone de coordonnées (8, 10) est située à une distance de ladite deuxième zone de coordonnées (9) sur la surface imaginaire (7).

11. Procédé selon la revendication 10, dans lequel le produit (1, 1') est une étiquette adhésive.

12. Procédé selon la revendication 10 ou 11, dans lequel les étapes d'enregistrement et de lancement sont effectuées au moyen d'un stylo numérique capable de détecter le premier motif (5, 5') et le deuxième motif, dans lequel l'étape de lancement de l'exécution de ladite fonction prédéterminée comprend l'étape consistant à associer les informations enregistrées à ladite fonction en connectant, à l'aide d'une indication avec le stylo numérique, le produit (1, 1') et la partie de la surface pour écrire (30) sur laquelle les informations enregistrées sont écrites.

13. Procédé selon l'une quelconque des revendications 10 à 12, dans lequel les étapes d'enregistrement et de lancement sont effectuées au moyen d'un stylo numérique capable de détecter le premier motif (5, 5') et le deuxième motif, comprenant en outre l'étape d'enregistrement d'une indication d'adresse à l'aide du stylo numérique.
